# EUROPEAN PATENT SPECIFICATION

(11) **EP 1 547 420 B1**
(45) Date of publication and mention of the grant of the patent: **18.04.2012**
(21) Application number: 03741739.1
(22) Date of filing: 04.07.2003
(51) Int. Cl.: H04W 24/08

(54) **SUBSCRIBE-NOTIFY FUNCTION BETWEEN PLMN NODES**
UNTERZEICHNEN-TEILEN SIE FUNKTION ZWISCHEN PLMN NULLPUNKT MIT
FONCTION DE NOTIFICATION D'ABONNEMENT ENTRE NOEUDS PLMN

(30) Priority: 31.07.2002 US 399430 P; 03.03.2003 US 377107
(43) Date of publication of application: 29.06.2005
(73) Proprietor: Telefonaktiebolaget LM Ericsson (publ), 164 83 Stockholm (SE)
(72) Inventor: EDLUND, Peter, S-147 33 Tumba (SE); MAGUIRE, Patrick, County Leitrim (IE)
(74) Representative: Kühn, Friedrich Heinrich
(86) International application number: PCT/SE2003/001175
(87) International publication number: WO 2004/012475

(56) References cited:
- WO-A-01/22748
- WO-A-01/60000
- WO-A-03/003650
- US-B1- 6 289 384

## Description

### FIELD OF THE INVENTION

The present invention pertains to wireless telecommunications, and particularly to transmission of information between nodes of a public land mobile radio network (PLMN).

### BACKGROUND OF THE INVENTION

To keep pace with the evolution of mobile telephonic technology, public land mobile radio network (PLMN) architecture is being expanded and modified to fulfil the requirements of the technology it delivers. The functional scope of network nodes and their interfaces are being tailored to meet the evolving technology requirements.

Intensive efforts have been devoted to defining a core network (CN) architecture which is compatible with all radio access technologies (RATs). These efforts require the definition of core network specific functionality which will reside in the core network, as well as RAT specific functionality which resides in the specific radio access network (RAN). Consequently, RAT specific functionalty which was previously resident in the core network is being relocated to the specific RAN, and vice versa.

In order to provide such advanced services such as "always connected" service and "global seamless roaming", the complex inter-node signaling must more efficiently and effectively handle the required information exchange for service delivery. As exemplified by the representative developments discussed below, data exchange between PLMN nodes is increasingly germane and required to achieve efficient service delivery for more sophisticated services and operations.

The new PLMN architecture alluded to above has somewhat resulted in a change of data ownership. As a result, certain service solutions have been compromised. Consider, for example, the difficult that arises when a MSC node (which, according to the new PLMN architecture, now hosts all codecs) is required in conjunction with a handover of a circuit switch service to choose a codec in a cell which has legacy transceivers (e.g., transceivers that do not support all coding schemes). The cell may not have a codec type compatible with that currently used at the MSC for the circuit switched service. Therefore, information regarding supported coding schemes (codec types) may now need to be exchanged between base station controller nodes to assist in handover decisions. For inter-MSC handover, it has been proposed that the serving MSC have knowledge of the codec configuration in the target MSC (if the codec configuration in the target MSC is different from that of the serving MSC and if the target MSC which hosts the codecs controls a different media gate way (MGW)).

Additionally, new functionality such as "MSC in Pool"/"Iu Flex" has imposed certain requirements on all CNs in a pool of core network nodes to have knowledge of the load of all core network nodes in neighboring pools in order to assist in handover decisions.

Inter-RAT handover may now be triggered due to cell load. In this regard, it has been proposed that the source system have knowledge of the cell load in the target system to assist in the decision-making procedure.

Network Assisted Cell Change (NACC) requires system information availability of the target cell at the source cell to be sent down to the user equipment unit (mobile station) prior to the cell change, in order to speed up the cell change procedure.

Improvement of Radio Resource Management for Handover/Relocation based Common Radio Resource Management (CRRM) requires a feature which distributes external cell traffic load data and measurements between base station controller nodes (e.g., radio network controllers). This information is required both for packet switched and circuit switched handover in second generation (2G)/third generation (3G) networks.

### Brief summary

What is needed therefore, and an object of the present invention, is an effective data exchange mechanism between PLMN nodes, and PLMN nodes suitable for such effective data exchange.

A telecommunications network features a subscription and notification function whereby a first node subscribes to a notification service of a second node. The first node generates a subscription request message which is received at the second node. The subscription request message specifies at least one, and preferably plural, parameters of the second node for subscription reporting purposes. The second node performs appropriate monitoring with respect to the parameter(s), and generates a notification message upon occurrence of one or more of (1) expiration of a periodic notification interval; and (2) attainment of a threshold associated with the parameter of the node.

The notification message includes a report of the parameter of the node. One or more parameters of the second node are reported in the notification message. A parameter of the second node can include not only parameters related to characteristics and/or capabilities of the second node per se, but also parameters relating to cells controlled by the second node. For example, such parameters can include capacity or load of the second node. When the second node is one of a base station controller node and a radio network controller node, the parameter(s) of the second node can be one or more of the following: load of a cell controlled by the second node; capacity of a cell controlled by the second node; a coding scheme supported by a cell controlled by the second node; a codec type supported by the second node; quality of service capability of the second node; and, a measurement concerning a cell controlled by the second node.

The first and second nodes involved in the subscription/notification function can have various relations. For example, the involved nodes can either be peer nodes, or a supervisory node and a subservient node. The first node and the second node can be of the same or differing technology networks. The nodes can be radio access network nodes (or base station controller nodes) of the same or differing technology type. For example, the first node can be either a base station controller node or a radio network controller node while the second node is either a base station controller node or a radio network controller node. The first node may be a source node and the second node a target node for handover purposes. Alternatively, the nodes can be core network nodes of the same or differing core networks.

In one of its aspects, the invention concerns the node to which subscription is made and which performs the notification of its parameter(s). Such node includes a subscription enroller which receives a subscription request message (which specifies one or more parameter(s) of the node for subscription reporting purposes) and a notifier which generates the notification message.

In a method of operation, the subscription request message is generated and received at the second node. The second node generates the notification message upon occurrence of one or more of (1) expiration of a notification interval; and (2) attainment of a threshold associated with the parameter of the node. In one implementation of the method, one or both of the subscription message and the notification message are transmitted directly between the first node and the second node (e.g., transmitted between peer nodes). In another implementation in which the first and second nodes are peer nodes of a radio access network, one or both of the subscription message and the notification message are tunneled transparently between the first node and the second node through a core network using a generic container.

An example of generation of a notification message upon occurrence both of (1) expiration of a periodic notification interval; and (2) attainment of a threshold associated with the parameter of the node occurs, for example, when reporting it provided periodically after a certain threshold is attained.

### Brief description of the drawings

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.

Fig. 1 is diagrammatic view of showing certain messages germane to a subscription/notification service which are transmitted between two nodes of a telecommunications network.

Fig. 2 is a diagrammatic view showing basic generic logic involved in a subscription/notification service.

Fig. 3A, Fig. 3A(1), Fig. 3A(2), Fig. 3B, Fig. 3C, and Fig. 3C(1) are diagrammatic views of example messages germane to a subscription/notification service which are transmitted between two nodes.

Fig. 4 is a diagrammatic view of an example telecommunications network in which the subscription/notification service may be performed.

Fig. 5A is a diagrammatic view showing basic example messages transmitted in conjunction with a subscription/notification service involving two peer nodes of a radio access network when there is a direct interface between the two peer nodes.

Fig. 5B is a diagrammatic view showing basic example messages transmitted in conjunction with a subscription/notification service involving two peer nodes of a radio access network when there is no direct interface between the two peer nodes.

Fig. 5C is a diagrammatic view showing basic example messages transmitted in conjunction with a subscription/notification service involving a supervisory node and a subservient node of a radio access network, with the subservient node having a subscription/notification function.

Fig. 5D is a diagrammatic view showing basic example messages transmitted in conjunction with a subscription/notification service involving a supervisory node and a subservient node of a radio access network, with the subservient node having a subscription/notification function.

Fig. 6A is a diagrammatic view showing basic example messages transmitted in conjunction with a subscription/notification service involving two peer nodes of differing radio access networks when there is a direct interface between the two peer nodes.

Fig. 6B is a diagrammatic view showing basic example messages transmitted in conjunction with a subscription/notification service involving two peer nodes of differing radio access networks when there is no direct interface between the two peer nodes.

Fig. 7A is a diagrammatic view showing basic example messages transmitted in conjunction with a subscription/notification service involving two peer nodes when there is no direct interface between the two peer nodes, and when the peer nodes do not have a common core network node.

Fig. 7B is a diagrammatic view showing basic example messages transmitted in conjunction with a subscription/notification service involving two peer nodes of differing radio access networks when there is no direct interface between the two peer nodes, and when the peer nodes do not have a common core network node.

Fig. 8A is a diagrammatic view showing basic example messages transmitted in conjunction with a subscription/notification service involving a core network node and a node of a radio access network, with the node of a radio access network having a subscription/notification function.

Fig. 8B is a diagrammatic view showing basic example messages transmitted in conjunction with a subscription/notification service involving a core network node and a node of a radio access network, with the core network node having a subscription/notification function.

Fig. 9A is a diagrammatic view showing basic example messages transmitted in conjunction with a subscription/notification service involving core network nodes in differing code network pools, wherein a core network node knows addresses of all core network nodes in a neighboring pool.

Fig. 9B is a diagrammatic view showing basic example messages transmitted in conjunction with a subscription/notification service involving core network nodes in differing code network pools, wherein a core network node knows only an address of a default node in a neighboring pool.

Fig. 10A is message diagram showing transmission of a subscription request message between peer nodes of a radio access network when there is a direct interface between the peer nodes.

Fig. 10B is a message diagram showing transmission of a subscription request message between peer nodes of a radio access network when there is not a direct interface between the peer nodes.

Fig. 10C is a message diagram showing transmission of a subscription request message between peer nodes of a radio access network when there is not a direct interface between the peer nodes, and when the peer nodes do not have a common core network node.

Fig. 11A is a message diagram showing transmission of a subscription request message between core network nodes in differing code network pools, wherein a core network node knows addresses of all core networks in a neighboring pool.

Fig. 11B is a message diagram showing transmission of a subscription request message between core network nodes in differing code network pools, wherein a core network node knows only an address of a default node in a neighboring pool.

Fig. 12 is a diagrammatic view of example subscription request message according to one mode.

### Detailed description

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well-known devices, circuits, and methods are omitted so as not to obscure the description of the present invention with unnecessary detail. Moreover, individual function blocks are shown in some of the figures.

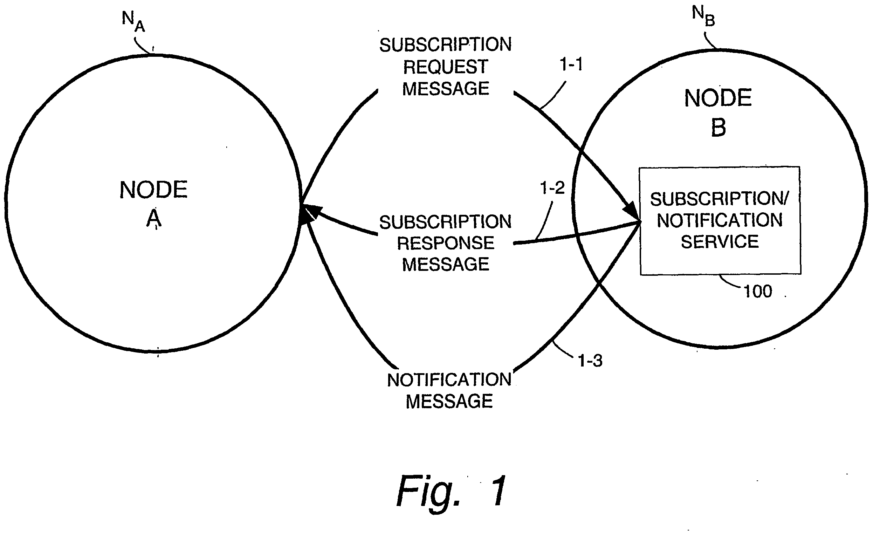

Fig. 1 shows two representative, example telecommunications nodes N_{A} and N_{B} for the purpose of generically depicting performance of a subscription/notification function. As explained subsequently with reference to various example scenarios, the first node N_{A} and the second node N_{B} involved in the subscription/notification function can have various relations.

In essence, the first node N_{A} subscribes to a subscription/notification service 100 of the second node N_{B}. The first node N_{A} generates a subscription request message 1-1 which is received at the second node. The subscription request message 1-1 basically apprises the second node N_{B} that the first node N_{A} wishes to subscribe to the subscription/notification service 100 hosted by second node N_{B}. The subscription request message 1-1 specifies at least one, and preferably plural, parameters of the second node for subscription reporting purposes. A parameter of the second node can include not only parameters related to characteristics and/or capabilities of the second node per se, but also parameters relating to cells controlled by the second node.

When the request for a subscription is approved at second node N_{B}, the subscription/notification service 100 of second node N_{B} sends a subscription response message 1-2 to first node N_{A}. Thereafter, second node N_{B} performs appropriate monitoring with respect to the parameter(s) which mentioned in the subscription request message 1-1 for the purpose of generating a notification message 1-3 for transmission to first node N_{A} at an appropriate time. For example, the notification message 1-3 may be generated upon occurrence of one or more of (1) expiration of a periodic notification interval; and (2) attainment of a threshold associated with the parameter of the node. The notification message 1-3 includes a report of the parameter of the node.

One or more parameters of the second node can be reported in the notification message. As mentioned above, the parameter of the second node can include not only parameters related to characteristics and/or capabilities of the second node per se, but also parameters relating to cells controlled by the second node. For example, such parameters can include capacity or load of the second node. When the second node is one of a base station controller node and a radio network controller node, the parameter(s) of the second node can be one or more of the following: load of a cell controlled by the second node; capacity of a cell controlled by the second node; a coding scheme supported by a cell controlled by the second node; a codec type supported by the second node; quality of service capability of the second node; and, a measurement concerning a cell controlled by the second node.

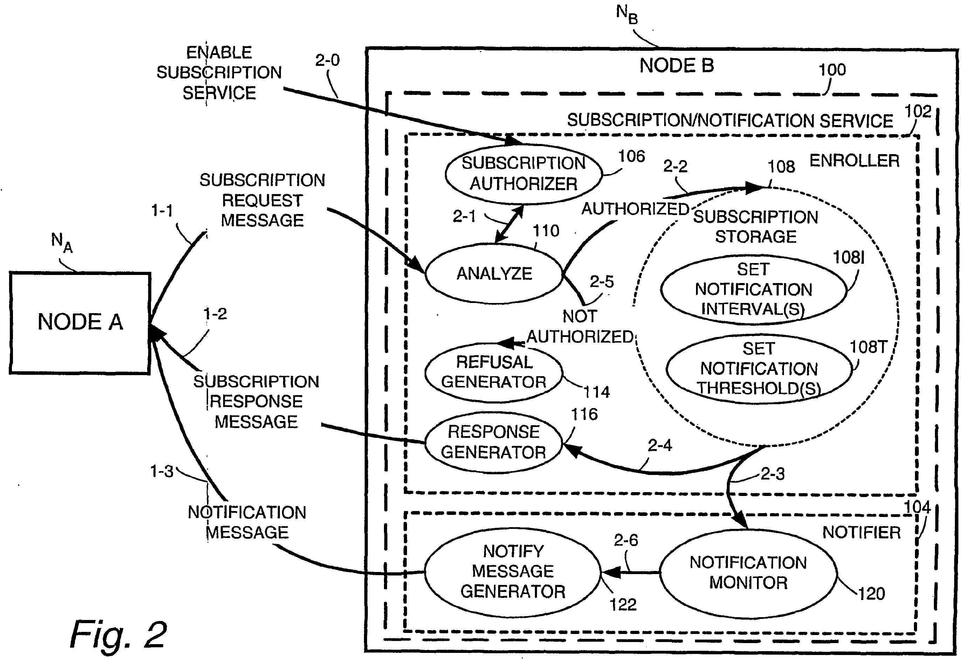

Fig. 2 shows basic generic logic involved in an example implementation of subscription/notification service 100 at representative second node N_{B}. As shown in the example implementation of Fig. 2, subscription/notification service 100 includes a subscription enroller 102 which receives subscription request message 1-1 and a notifier 104 which generates the notification message 1-3. In its example implementation, the subscription enroller 102 includes subscription authorizer 106; subscription storage 108; analyze function 110; refusal generator 114; and response generator 116. The notifier 104 includes notification monitor 120 and notify message generator 122.

In the particular illustrated example, the subscription/notification service 100 is implemented in conjunction with instructions executed by a processor of second node N_{B}. Those skilled in the art will appreciate that the functions of subscription/notification service 100 may be implemented using individual hardware circuits, using software functioning in conjunction with a suitably programmed digital microprocessor or general purpose computer, using an application specific integrated circuit (ASIC), and/or using one or more digital signal processors (DSPs). Moreover, one or more of the particular functionalities shown as comprising subscription/notification service 100 need not necessarily be included in subscription/notification service 100, but could instead reside elsewhere or be distributed in various manners.

In depicting the basic generic logic involved in the example implementation of subscription/notification service 100, Fig. 2 shows that subscription/notification service 100 must first be enabled. To this end, action 2-0 in Fig. 2 reflects that the subscription/notification service 100 is enabled. Such enablement of the subscription/notification service 100 can occur by operator input to or operator configuration of subscription/notification service 100, or by some external directive such as a message or signal (e.g., from another node (such as a core network node in the case of second node N_{B} being a radio network controller node or the like)). The enable subscription service directive 2-0 may specify that the subscription/notification service 100 is authorized to register all subscriptions which thereafter may be requested, or may impose certain conditions by which requested subscriptions are to be qualified for approval. Receipt of the enable subscription service directive 2-0 is noted and stored by subscription authorizer 106.

Upon receipt of the subscription request message 1-1, as action 2-1 the analyze function 110 confirms with subscription authorizer 106 whether the particular subscription as requested by subscription request message 1-1 is authorized. Assuming that the requested subscription is authorized, as action 2-2 information regarding the requested subscription is stored in subscription storage 108. Included in the subscription notification is the parameter(s) to be monitored, as well as certain notification information. The notification information can be either an notification interval (as depicted by subfunction 108I) or a notification threshold (as depicted by subfunction 108T), or a combination thereof. Further, as action 2-3, the stored notification information is forwarded to notification monitor 120. In addition, upon completion of the storing and processing of the subscription information, as action 2-4 response generator 116 is requested to transmit the subscription response message 1-2 to first node N_{A}.

Had it been the case that the particular subscription requested by subscription request message 1-1 were not authorized, as action 2-5 the refusal generator 114 would have been requested to generate a subscription refusal message.

After the subscription has been authorized and stored in the general manner summarized above, notification monitor 120 determines when, if at all, a notification message should be sent to first node N_{A} in conjunction with the subscription enrolled for first node N_{A}. Such determination is based on the notification information stored in conjunction with action 2-2 previously described, of which notification monitor 120 was apprised in action 2-3. The notification information may be a periodic notification interval, a threshold associated with a parameter of the node (which may be specified in subscription request message 1-1), or both. Given such notification information, at an appropriate time as action 2-6 the notification monitor 120 may prompt the notify message generator 122 to generate the notification message 1-3 upon occurrence of one or more of (1) expiration of a periodic notification interval; and (2) attainment of a threshold associated with the parameter of the node.

An example of generation of a notification message upon occurrence both (e.g., a combination) of (1) expiration of a periodic notification interval; and (2) attainment of a threshold associated with the parameter of the node occurs, for example, when reporting it provided periodically after a certain threshold is attained.

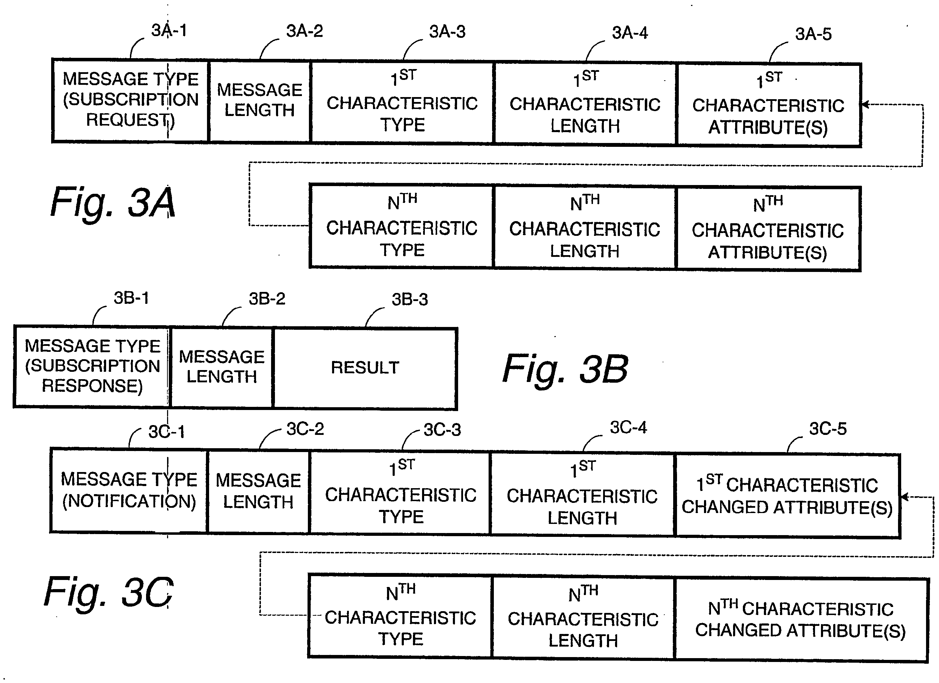

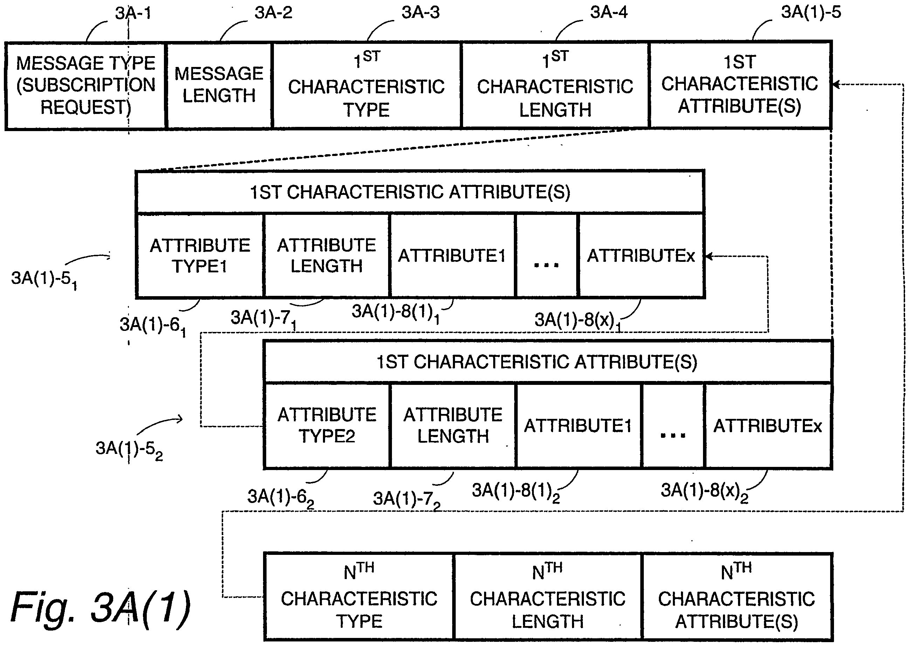

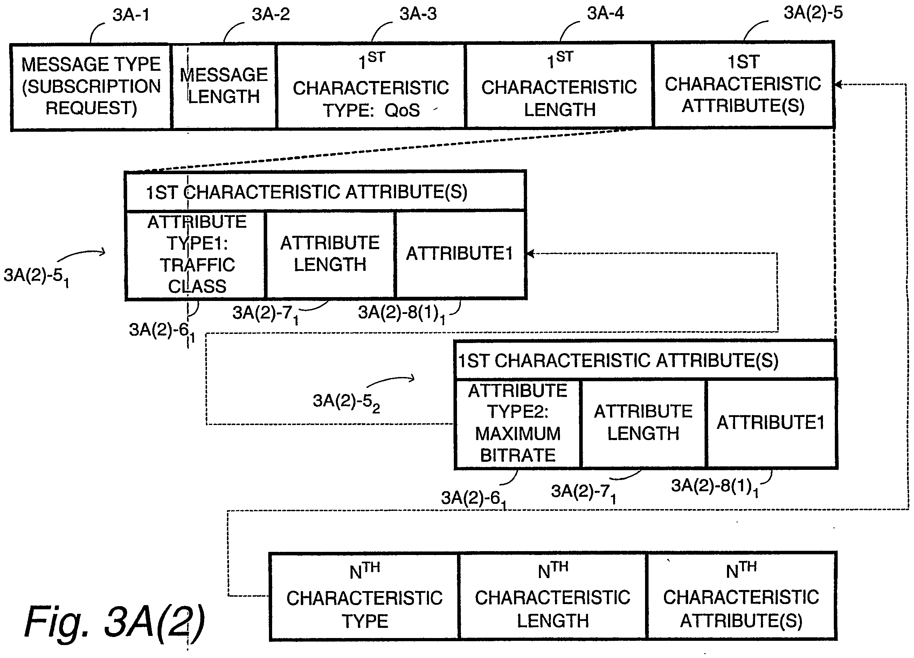

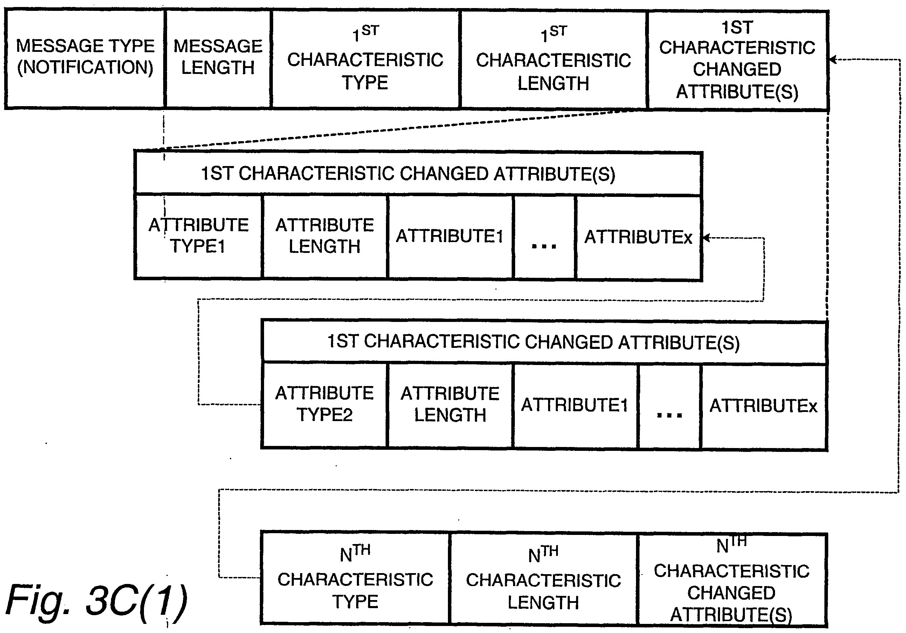

Fig. 3A, Fig. 3A(1), Fig. 3A(2), Fig. 3B, Fig. 3C, and Fig. 3C(1) illustrate example messages germane to a subscription/notification service which are transmitted between two nodes. Fig. 3A shows an example format of a representative subscription request message; Fig. 3B shows an example format of a representative subscription response message; Fig. 3C shows an example format of a representative notification message.

All the example messages herein described begin with a message type field. The message type field 3A-1 of the subscription request message of Fig. 3A has a value indicative of a subscription request. The message type field 3A-1 is followed by a message length field 3A-2, and then a one or more series of characteristic-related fields. For example, for a 1st characteristic type there is a 1st characteristic type field 3A-3, a 1st characteristic length field 3A-4, and a 1st characteristic attributes field 3A-5. Each characteristic type (from the 1st characteristic type to the Nth characteristic type) has a comparable trilogy of fields (e.g., characteristic type, length, and attribute(s)).

Fig. 3A(1) shows in more detail that an example format of one of the characteristic attributes field, and particularly the format of the characteristic attributes field 3A(1)-5. The characteristic attributes field 3A(1)-5 may comprise plural attribute types, two attribute types (ATTRIBUTE TYPE 1 and ATTRIBUTE TYPE 2) being shown in Fig. 3A(1) by way of example. A series of subfields are associated with each attribute type, e.g., series 3A(1)-5₁ for ATTRIBUTE TYPE 1 and series 3A(1)-5₂ for ATTRIBUTE TYPE 2. Each series of subfields comprises an attributes type subfield 3A(1)-6; an attribute length subfield 3A(1)-7; and one or more sub-attribute subfields such as subfield 3A(1)-8₁ through subfield 3A(1)-8ₓ (for subattributes ATTRIBUTE1 through ATTRIBUTEx, respectively).

The Characteristic types and ATTRIBUTE TYPES are specified in such a manner that they can be interpreted by the nodes. All attributes are optional so that the subscription can be for one, several, many, or all attributes of a characteristic, as desired by the subscriber. An internal attribute data for a specific attribute is mandatory.

Fig. 3A(2) provides a specific example subscription request message which is formatted generally in accordance with the format of Fig. 3A(1), but having only a 1st characteristic attribute. For the message of Fig. 3A(2), the characteristic attributes field 3A(2)-5 comprises two series of subfields 3A(2)-5₁ and 3A(2)-5₂ corresponding to the ATTRIBUTE TYPE1 and ATTRIBUTE TYPE2. In the specific example of Fig. 3A(2), ATTRIBUTE TYPE1 is traffic class and ATTRIBUTE TYPE2 is maximum bitrate. In the example of Fig. 3A(2), each attribute type has only one sub-attribute (e.g., only one attribute data). For example, ATTRIBUTE TYPE1 (traffic class) has attributes type subfield 3A(2)-6; attribute length subfield 3A(2)-7; and one sub-attribute subfield 3A(2)-8₁.

The representative subscription response message of Fig. 3B includes a message type field 3B-1 which is followed by a message length field 3B-2 and a result field 3B-3. The result field 3B-3 includes an indication of whether the subscription request was successful or not.

For the example, illustrative notification message of Fig. 3C, the message type field 3C-1 is followed by a message length field 3C-2, and then a one or more series of characteristic-related fields in much the same manner as the messages of Fig. 3A (and, optionally, the more detailed message of Fig. 3A(1)). Note, however, that for each characteristic type the fields such as field 3C-3 are changed attributes fields. In other words, in this particular format of the notification message, the fields such as field 3C-3 include subfields only for those attributes whose values have changed since a previous notification message (as illustrated in Fig. 3C(1)).

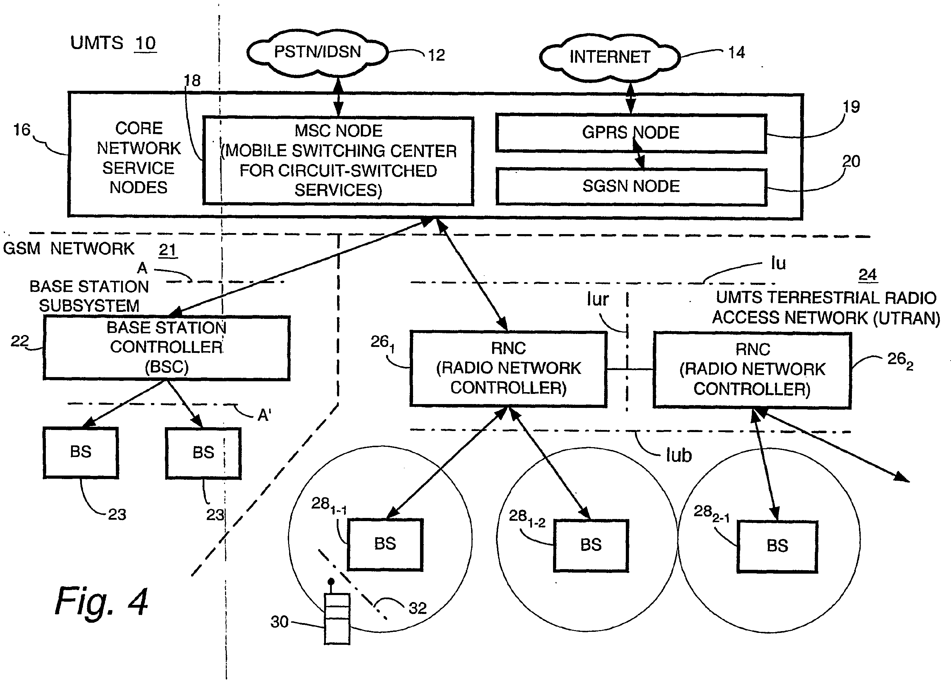

An example context for illustrating various hereinafter described implementation scenarios of subscription/notification service 100 occurs in a mobile telecommunications system 10 shown as that basically illustrated in representative fashion in Fig. 4. A representative, connection-oriented, external core network, shown as a cloud 12 may be for example the Public Switched Telephone Network (PSTN) and/or the Integrated Services Digital Network (ISDN). A representative, connectionless external core network shown as a cloud 14, may be for example the Internet. Both core networks are coupled to their corresponding service nodes 16. The PSTN/ISDN connection-oriented network 12 is connected to one or more connection-oriented service nodes which provide circuit-switched service, such as representative Mobile Switching Center (MSC) node 18. The Internet connectionless-oriented network 14 is connected through a Gateway General Packet Radio Service (GPRS) support node (GGSN) 19 to a General Packet Radio Service (GPRS) Service (SGSN) node 20, the latter being tailored to provide packet-switched type services.

Gateway GRPS support node (GGSN) 19 provides the interface towards the packet-switched networks (e.g., the Internet, X.25 external networks) represented by cloud 14. Gateway GRPS support node (GGSN) 19 translates data formats, signaling protocols and address information in order to permit communication between the different networks. Serving GPRS Support Node (SGSN) 20 provides packet routing to an from a SGSN service area, and serves GPRS subscribers which are physically located within the SGSN service area. Serving GPRS Support Node (SGSN) 20 provides functions such as authentication, ciphering, mobility management, charging data, and logical link management toward the user equipment unit. A GPRS subscriber may be served by any SGSN in the network depending on location. The functionality of Serving GPRS Support Node (SGSN) 20 and Gateway GRPS support node (GGSN) 19 may be combined in the same node, or may exist in separate nodes as shown in Fig. 4. Backbone network 21 provides connection between different GSN nodes and other components of the core network, and can be, e.g., an Internet Protocol (IP) network.

Fig. 4 further shows that plural radio access networks can interface with or access the core network nodes 16. Two representative radio access networks illustrated in Fig. 4 are a GSM network 21 and a UMTS Terrestrial Radio Access Network (UTRAN) 24. These two representative radio access networks are merely examples of two types of several radio access networks in conjunction with which the subscription/notification service can be employed. Moreover, it should be understood that Fig. 4 can be extrapolated to involve more than one GSM network and/or more than one UTRAN network.

The GSM network 21 is illustrated in representative fashion as including a base station controller (BSC) node 22 which is connected over an A interface to the core network nodes 16. Further, the base station controller (BSC) node 22 is connected over an A' interface to one or more base stations 23. It should be understood that GSM network 21 typically comprises more than one base station controller (BSC) 22, and that the number of base stations 23 connected to any base station controller (BSC) 22 may vary.

The core network service nodes 18 and 20 connect to the UTRAN 24 over a radio access network (RAN) interface referred to as the Iu interface. UTRAN 24 includes one or more radio network controllers (RNCs) 26 and one or more base stations (BS) 28. For sake of simplicity, the UTRAN 24 of Fig. 4 is shown with only two RNC nodes, particularly RNC 26₁ and RNC26₂. Each RNC 26 is connected to one or more base stations (BS) 28. For example, and again for sake of simplicity, two base station nodes are shown connected to each RNC 26. In this regard, RNC 26₁ serves base station 28₁₋₁ and base station 28₁₋₂, while RNC 26₂ serves base station 28₂₋₁ and other unillustrated base stations. It will be appreciated that a different number of base stations can be served by each RNC, and that RNCs need not serve the same number of base stations. Moreover, Fig. 4 shows that an RNC can be connected over an Iur interface to one or more other RNCs in the UTRAN 24. Further, those skilled in the art will also appreciate that in UTRAN parlance a base station is sometimes also referred to in the art as a radio base station, a node B, or B-node.

It should be understood that at least one and likely more of the RNCs of the radio access network have an interface to one or more core networks. Further, in order to support continuation of established connections when the UE is moving between cells controlled by different RNCs in the Radio Access Network, a Signalling Network (e.g. Signalling System No 7) may be instituted between certain RNC nodes to enable the RNCs to perform the required RNC-RNC signalling.

In the illustrated embodiments, for sake of simplicity each base station is shown as serving one cell. Each cell is represented by a circle which surrounds the respective base station. It will be appreciated by those skilled in the art, however, that a base station may serve for communicating across the air interface for more than one cell. For example, two cells may utilize resources situated at the same base station site. Moreover, each cell may be divided into one or more sectors, with each sector having one or more cell/carriers.

A user equipment unit (UE), such as user equipment unit (UE) 30 shown in Fig. 4, communicates with one or more cells or one or more base stations over a radio or air interface 32. Each of the radio interface 32, the Iu interface, the Iub interface, and the Iur interface of UTRAN 24, and the A and A' interfaces of GSM network 21, are shown by dash-dotted lines in Fig. 4.

In UTRAN 24, preferably radio access is based upon Wideband, Code Division Multiple Access (WCDMA) with individual radio channels allocated using CDMA spreading codes. Of course, other access methods may be employed.

The first and second nodes involved in the subscription/notification function can have various relations. For example, the involved nodes can either be peer nodes, or a supervisory node and a subservient node. The first node and the second node can be of the same or differing technology networks. The nodes can be radio access network nodes (or base station controller nodes) of the same or differing technology type. For example, the first node can be either a base station controller node or a radio network controller node while the second node is either a base station controller node or a radio network controller node. The first node may be a source node and the second node a target node for handover purposes. Alternatively, the nodes can be core network nodes of the same or differing core networks.

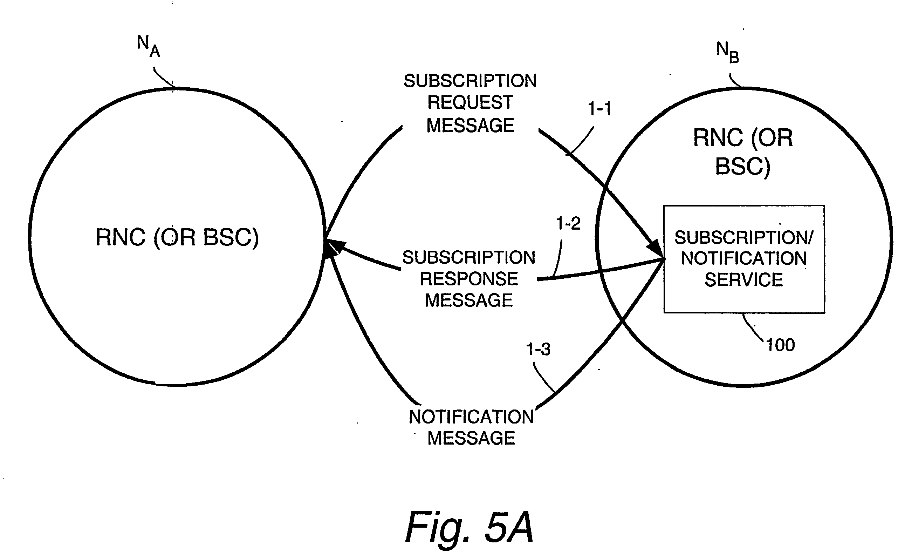

Fig. 5A shows an implementation scenario wherein the subscription/notification service involves two peer nodes of a radio access network when there is a direct interface between the two peer nodes. For example, the two peer nodes may be the two radio network controller nodes 26₁ and 26₂ shown in Fig. 4, with the direct interface being the Iur interface. Alternatively, the two peer nodes may be two base station controller (BSC) nodes of a network such as the GSM network 21 of Fig. 4, in which case each of the nodes are of the type depicted by base station controller (BSC) node 22. Fig. 5A, like other ensuing implementation scenarios, illustrates that the first node N_{A} sends the subscription request message 1-1 to the second node N_{B}. The second node N_{B} responds to the subscription request message 1-1 with the subscription response message 1-2, and thereafter as appropriate sends one or more notification messages 1-3 to first node N_{A}. The notification messages 1-3 are sent to first node N_{A} either upon expiration of a notification reporting interval, or upon a parameter attaining a prescribed threshold. The operation of subscription notification service 100 for the Fig. 5A scenario, and other ensuing implementation scenarios, can be in accordance with the generic logic aforedescribed with reference to Fig. 2.

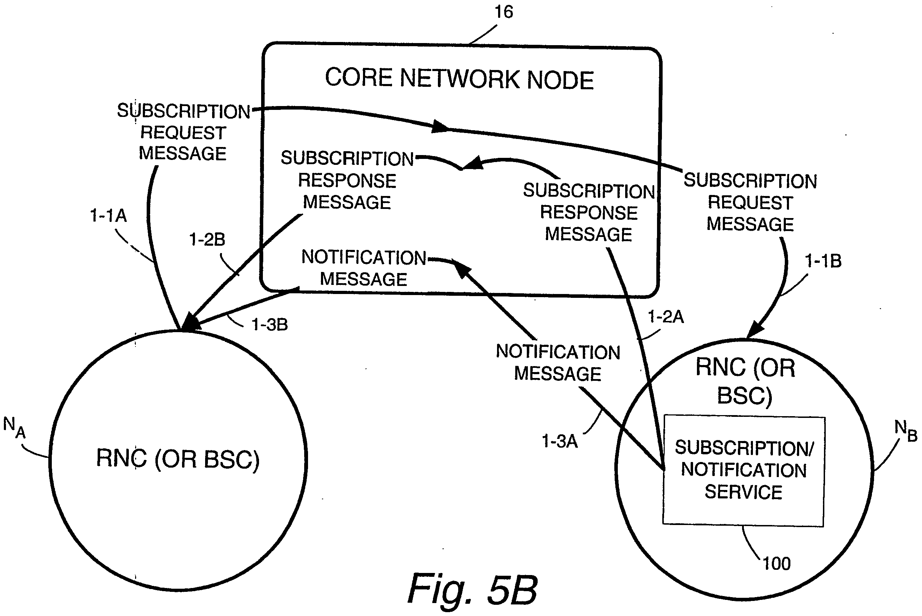

Fig. 5B shows an implementation scenario wherein the subscription/notification service involves two peer nodes of a radio access network when there is no direct interface between the two peer nodes. As in the Fig. 5A scenario, the two peer nodes may be the two radio network controller nodes 26₁ and 26₂ shown in Fig. 4, or two base station controller (BSC) nodes 22 of a network such as the GSM network 21 of Fig. 4. However, unlike the Fig. 5A scenario, there is no direct interface (e.g., no Iur interface) between first node N_{A} and second node N_{B}. Rather, the messages associated with the subscription notification service 100 are instead directed by the sending node to a core network node 16 which relays or repackages the contents of the messages for transmission to the recipient node. The core network node 16 can be either a MSC node 18 or a SGSN node 20 (see Fig. 4).

For example, Fig. 5B shows that first node N_{A} sends the subscription request message to core network node 16 in the form of message 1-1A. The core network node 16 uses the contents of the subscription request message received from first node N_{A} to prepare and send the message 1-1B to second node N_{B}. The messages 1-1A and 1-1B are messages suitable for transmission over the interface (e.g., Iu interface) between the core network node 16 and nodes N_{A}, N_{B}, but are labeled as subscription request messages in Fig. 5B by reason of inclusion therein of the information pertinent to performance of subscription notification service 100. The same transmission considerations apply for the subscription response messages and the notification messages in the Fig. 5B scenario.

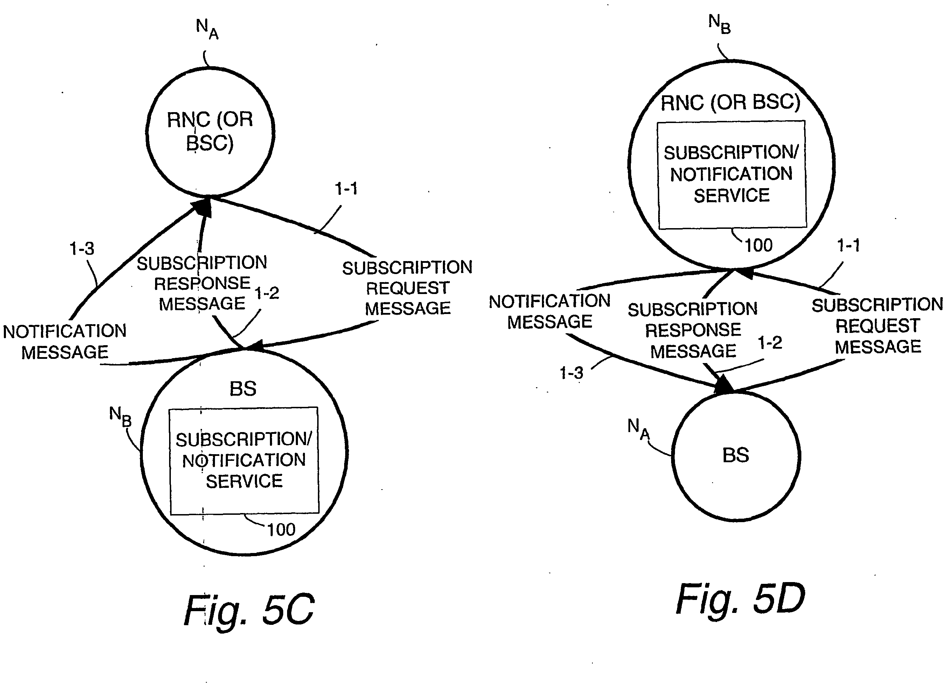

Fig. 5C and Fig. 5D show example implementation scenarios wherein the subscription/notification service involves a supervisory node and a subservient node of a radio access network. In the example scenarios of Fig. 5C and Fig. 5D, the supervisory node is a RNC node (e.g., an RNC 26 of a UTRAN) or a BSC node (a BSC 22 of a GSM network), and the subservient node is a base station (BS) node.

In the Fig. 5C scenario, the supervisory node (the first node N_{A} in Fig. 5C) sends the subscription request message 1-1 to the subservient node (second node N_{B}). The subservient node (second node N_{B}) has the subscription notification service 100, which sends the subscription response message 1-2 to the supervisory node (first node N_{A}) in response to the subscription request message 1-1, and which thereafter sends one or more notification messages 1-3 to the supervisory node (first node N_{A}) as appropriate. In the Fig. 5D scenario, the supervisory node (second node N_{B}) has the subscription notification service 100, so that relative to the scenario of Fig. 5C the direction of transmission is reversed for each of the subscription request message 1-1, subscription response message 1-2, and notification message 1-3.

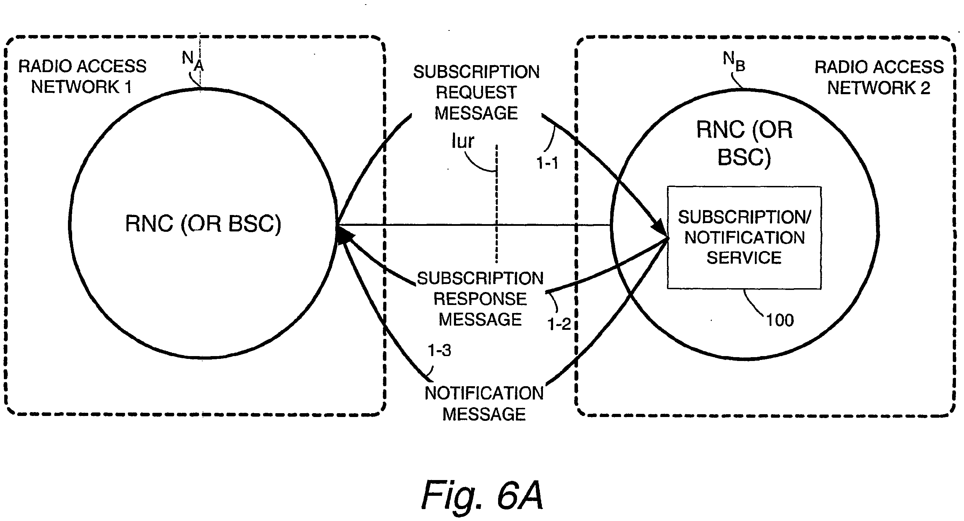

Fig. 6A shows an implementation scenario wherein the subscription/notification service involves two peer nodes of differing radio access networks when there is a direct interface between the two peer nodes. One or more of the two peer nodes may be the radio network controller nodes such as nodes 26 shown in Fig. 4, or one or more of the two peer nodes may be a base station controller (BSC) node 22 of a network such as the GSM network 21 of Fig. 4. The Fig. 6A scenario thus resembles the Fig. 5A scenario, but with the two peer nodes of differing radio access networks. For example, the first node N_{A} may be an RNC node of a UTRAN network, while the second node N_{B} may be a BSC node of a GSM network. Alternatively, the two peer nodes may both be RNC nodes, but of differing UTRAN networks. As a further alternative implementation, the two peer nodes may both be BSC nodes of differing GSM networks. Of course, as in other scenarios herein described, UTRAN and GSM are cited as examples of radio access networks, it being understood that principles of the invention are also applicable to other types of radio access networks or combinations of other radio access networks.

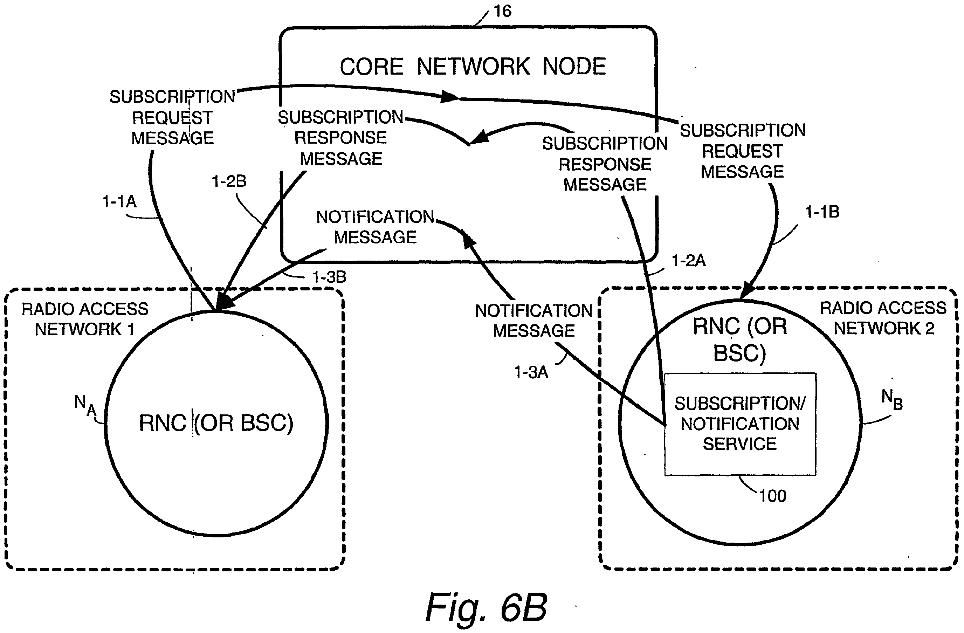

Fig. 6B shows an implementation scenario wherein the subscription/notification service involves two peer nodes of differing radio access networks when there is no direct interface between the two peer nodes. The scenario of Fig. 6B thus resembles the scenario of Fig. 5B, but with the two peer nodes belonging to different radio access networks in the same manner as above described with reference to the Fig. 6A scenario.

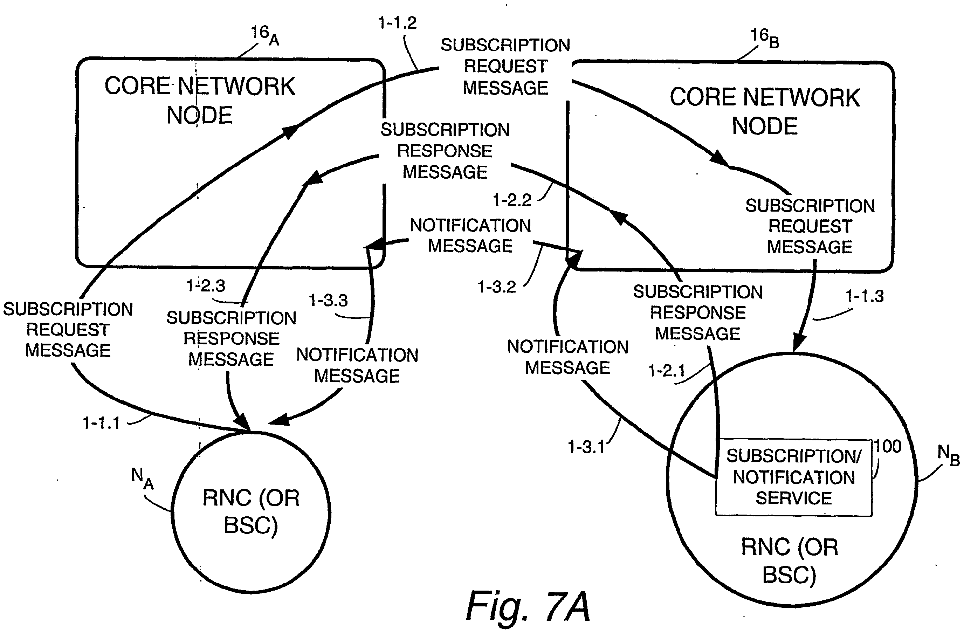

Fig. 7A shows an implementation scenario wherein the subscription/notification service involves two peer nodes when there is no direct interface between the two peer nodes, and when the peer nodes do not have a common core network node. As in other above described scenarios, the two peer nodes may be the two radio network controller nodes 26₁ and 26₂ shown in Fig. 4, or two base station controller (BSC) nodes 22 of a network such as the GSM network 21 of Fig. 4. However, as in the Fig. 5B scenario, there is no direct interface (e.g., no Iur interface) between first node N_{A} and second node N_{B}. Moreover, first node N_{A} and second node N_{B} are not connected to a common core network node 16. Rather, first node N_{A} is connected to core network node 16_{A} while second node N_{B} is connected to core network node 16_{B}, with core network node 16_{A} and core network node 16_{B} being connected to one another. In the Fig. 7A scenario, the messages associated with the subscription notification service 100 are directed by the sending node to its core network node 16, which relays or repackages the contents of the messages for transmission to the core network node 16 which is connected to the recipient node. The core network node 16 connected to the recipient node then relays or repackages the contents of the messages for transmission to the recipient node. For example, Fig. 7A shows that first node N_{A} sends the subscription request message to core network node 16_{A} in the form of message 1-1.1. The core network node 16_{A} uses the contents of the subscription request message received from first node N_{A} to prepare and send the inter-MSC message 1-1.2 to core network node 16_{B}. The core network node 16_{B} uses the contents of the subscription request message as received in the inter-core network node message to prepare and send the message 1-1.3 to the recipient second node N_{B}. The messages 1-1.1 and 1-1.3 are messages suitable for transmission over the interface (e.g., Iu interface) between the core network node 16 and nodes N_{A}, N_{B}, while the message 1-1.2 is a suitable inter-CN message. Each of the messages 1-1.1, 1-1.2 , and 1-1.3 are labeled as subscription request messages in Fig. 7A by reason of inclusion therein of the information pertinent to performance of subscription notification service 100. The same transmission considerations apply for the subscription response messages and the notification messages in the Fig. 7A scenario.

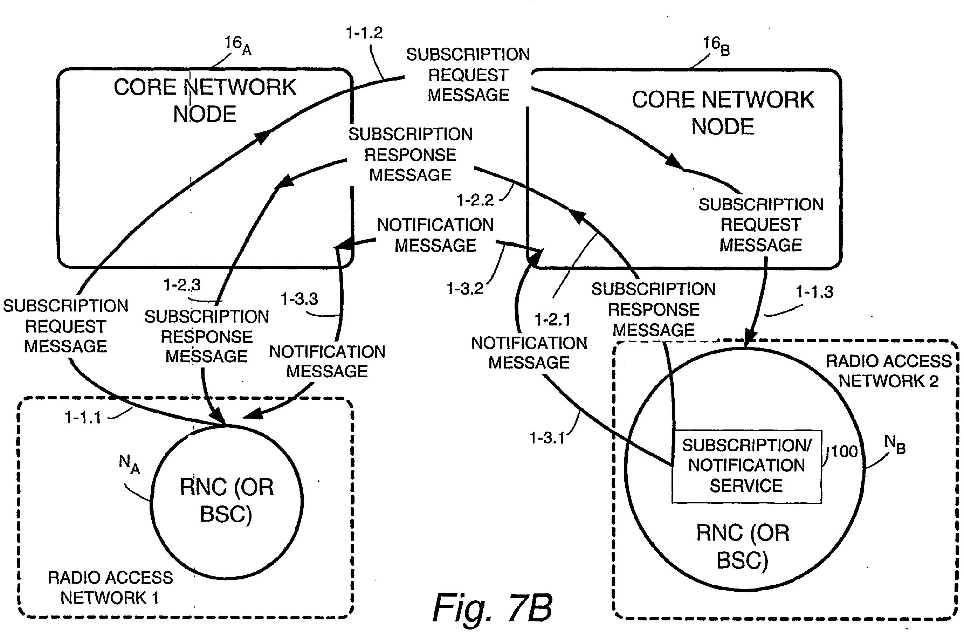

Fig. 7B shows an implementation scenario wherein the subscription/notification service involves two peer nodes of differing radio access networks when there is no direct interface between the two peer nodes, and when the peer nodes do not have a common core network node. The Fig. 7B scenario thus resembles the Fig. 7A scenario, but with first node N_{A} and second node N_{B} belonging to different radio access networks. Again, by way of example, the first node N_{A} may be an RNC node of a UTRAN network, while the second node N_{B} may be a BSC node of a GSM network. Alternatively, the two peer nodes may both be RNC nodes, but of differing UTRAN networks. As a further alternative implementation, the two peer nodes may both be BSC nodes of differing GSM networks.

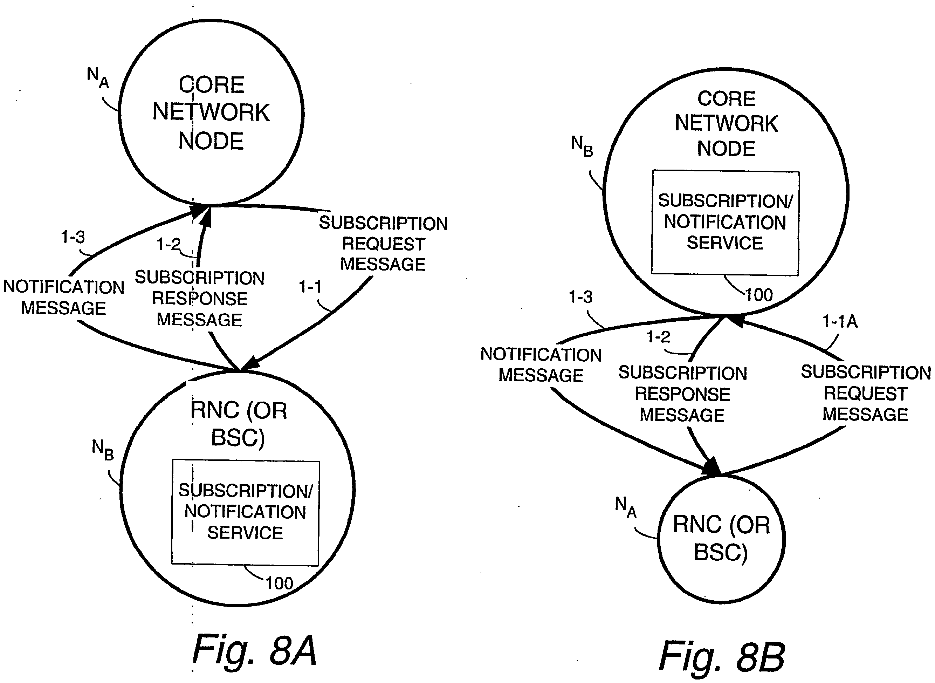

Fig. 8A shows an implementation scenario wherein the subscription/notification service involves a core network node (labeled as first node N_{A}) and a node of a radio access network (labeled as second node N_{B}). The first node N_{A} may be, for example, a MSC node 18 or a SGSN node 20 (see Fig. 4). The second node N_{B} may be either an RNC node of a UTRAN network, or a BSC node of a GSM network, or other comparable node of another type of radio access network. In the Fig. 8A scenario, the core network node (first node N_{A}) sends the subscription request message 1-1 to the radio access network node (second node N_{B}). The radio access network node (second node N_{B}) has the subscription notification service 100, which sends the subscription response message 1-2 to the core network node (first node N_{A}) in response to the subscription request message 1-1, and which thereafter sends one or more notification messages 1-3 to the core network node (first node N_{A}) as appropriate.

In the Fig. 8B scenario, the radio access network node is the first node N_{A}, and the core network node is the second node N_{B}. In the Fig. 8B scenario, the core network node (second node N_{B}) has the subscription notification service 100, so that relative to the Fig. 8A scenario the direction of transmission is reversed for each of the subscription request message 1-1, subscription response message 1-2, and notification message 1-3.

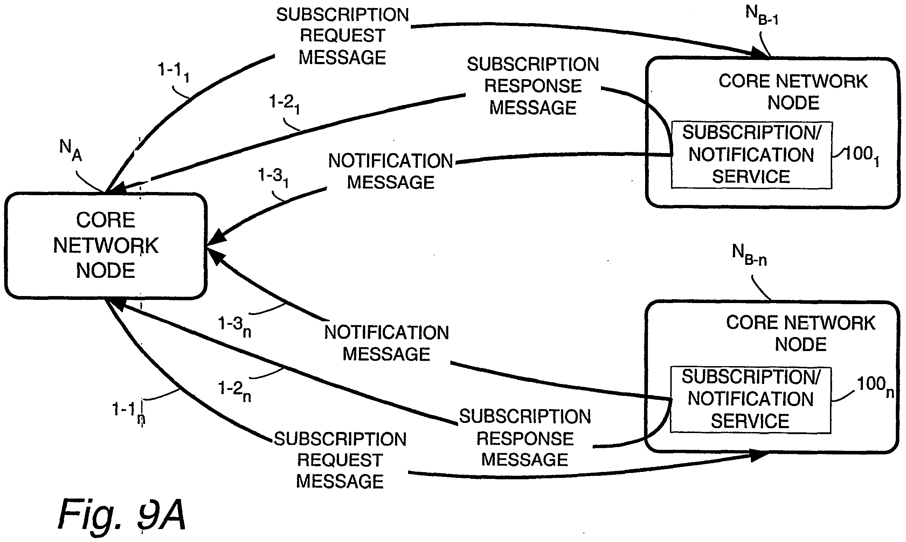

Fig. 9A shows an implementation scenario wherein the subscription/notification service involves core network nodes in differing code network pools. In particular, the first node N_{A} is a MSC node or SGSN node which belongs to a first core network node pool. The nodes N_{B-1} through N_{B-n}, on the other hand, are core network nodes (e.g., either MSC nodes or SGSN nodes) which belong to a second core network pool. In the Fig. 9A scenario, the first node N_{A} knows the addresses of all core network nodes in a neighboring pool. Accordingly, the first node N_{A} can send subscription request messages 1-1₁ through 1-1ₙ to each of the nodes N_{B-1} through N_{B-n}. The nodes N_{B-1} through N_{B-n} of the other pool, which have respective subscription notification services 100₁ through 100ₙ, send their respective subscription response messages 1-2₁ through 1-2ₙ and their respective notification messages 1-3₁ through 1-3ₙ back to first node N_{A}.

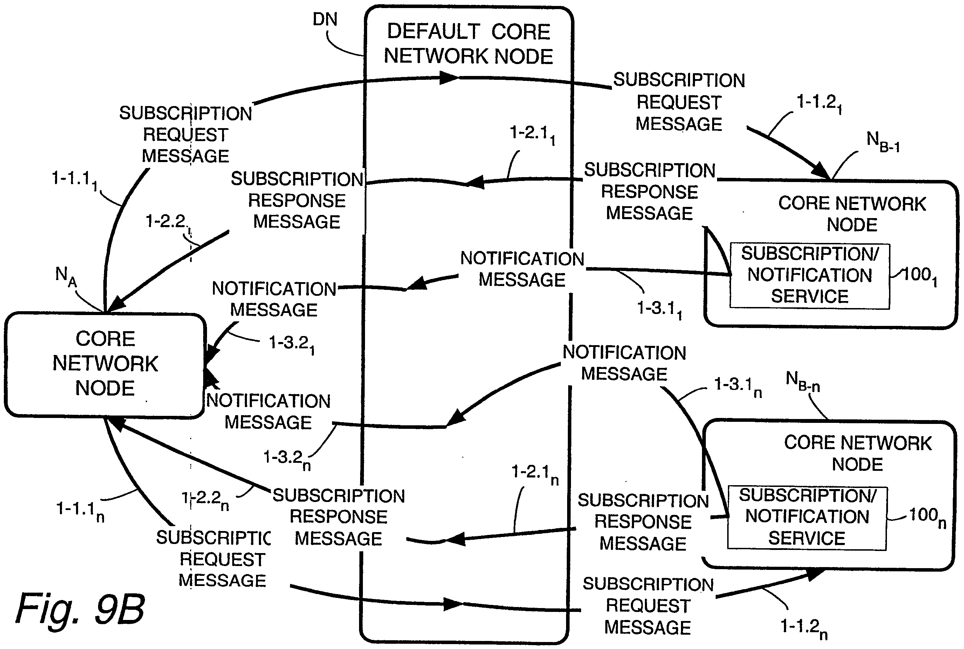

The Fig. 9B scenario resembles the Fig. 9A scenario, with the exception that first node N_{A} does not know the addresses of all core network nodes in the other pool. Rather, first node N_{A} knows only the address certain default core network nodes in the adjacent pool, such as the address of core network node DN shown in Fig. 9B. Therefore, in order to subscribe to the subscription notification services 100₁ through 100ₙ of the core network nodes N_{B-1} through N_{B-n} of the other pool, the first node N_{A} sends its subscription request messages 1-1.1₁ through 1-1.1ₙ for respective nodes N_{B-1} through N_{B-n} to the default node DN. The default node DN looks up or translates the addresses for the core network nodes N_{B-1} through N_{B-n} of the other pool. The default node DN of the target pool may be used to perform address translation as defined in 3GPP Ts 23.236. The default node DN then either forwards the subscription request messages 1-1.1₁ through 1-1.1ₙ or repackages the contents of the subscription request messages 1-1.1₁ through 1-1.1ₙ in other appropriate messages for transmission as subscription request messages 1-1.2₁ through 1-1.2ₙ to the respective core network nodes N_{B-1} through N_{B-n}.

In a manner understood from the previously described scenarios, the subscription notification services 100, through 100ₙ of the core network nodes N_{B-1} through N_{B-n} send their respective subscription response messages and, as and when appropriate, their respective notification messages. For example, subscription notification service 100₁ of second node N_{B}-1 sends its subscription response message 1-2.1₁ to first node N_{A} via default node DN. The default node DN relays or repackages the subscription response message as subscription response message 1-2.2₁ to first node N_{A}. Similar considerations apply for the notification message originated by second node N_{B}-1, and for the messages received by and originated by the subscription notification services of core network nodes N_{B-1} through N_{B-n}.

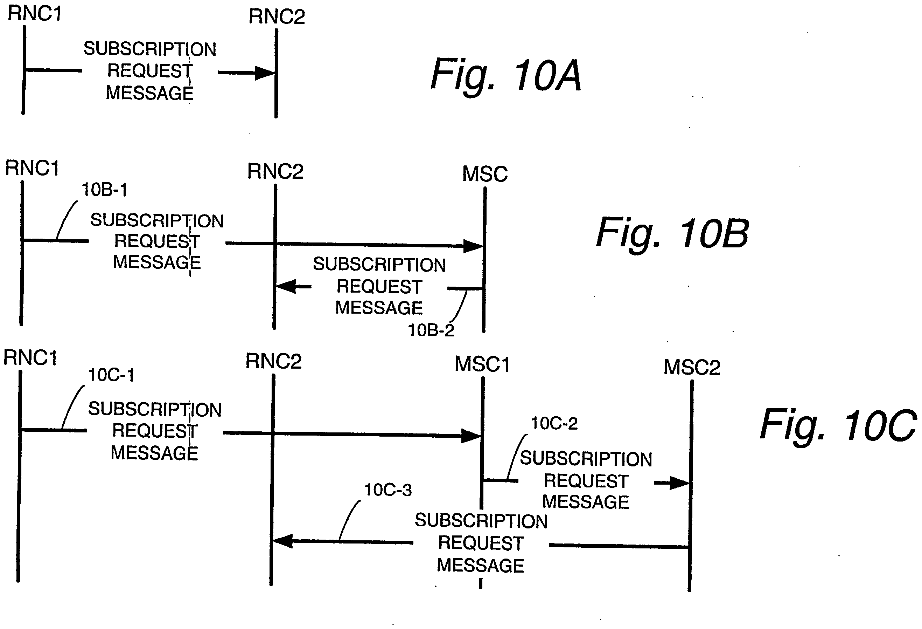

One general scenario of utilization of the subscribe-notification feature is between PLMN nodes, e.g., between peer nodes of a radio access network (RAN). Such peer nodes can be, for example, radio network controller (RNC) nodes or base station controller (BSC) nodes. These peer nodes can be served either by the same mobile switching center (MSC) or different mobile switching centers. Moreover, these RAN nodes can belong either to a same network or different networks. By virtue of being configured with appropriate data, the RAN peer nodes are aware of which cells belong to a neighboring peer node. Neighboring peer nodes are able to signal one another, either via signaling performed over a direct interface (if such exists) or via signaling which is tunneled through the core network. Examples of implementations of this general scenario are below discussed with reference to Fig. 10A, Fig. 10B, and Fig. 10C.

Fig. 10A is message diagram showing transmission of a subscription request message between peer nodes of a radio access network when there is a direct interface between the peer nodes. In the example shown in Fig. 10A, the peer nodes are radio network controller (RNC) nodes, particularly nodes RNC1 and RNC2. It should also be understood that the peer nodes of the radio access network could be termed base station controller (BSC) nodes.

Fig. 10B is a message diagram showing transmission of a subscription request message between peer nodes of a radio access network when there is not a direct interface between the peer nodes. In particular, the subscription request message is first routed as message 10B-1 from RNC1 to the MSC, and then as message 10B-2 from MSC to RNC2.

Fig. 10C is a message diagram showing transmission of a subscription request message between peer nodes of a radio access network when there is not a direct interface between the peer nodes, and when the peer nodes do not have a common core network node. In the Fig. 10C implementation, the subscription request message is first routed as message 10C-1 from RNC1 to MSC1, then as routed as message 10C-2 from MSC1 to MSC2, and then routed as message 10C-3 from MSC1 to RNC2.

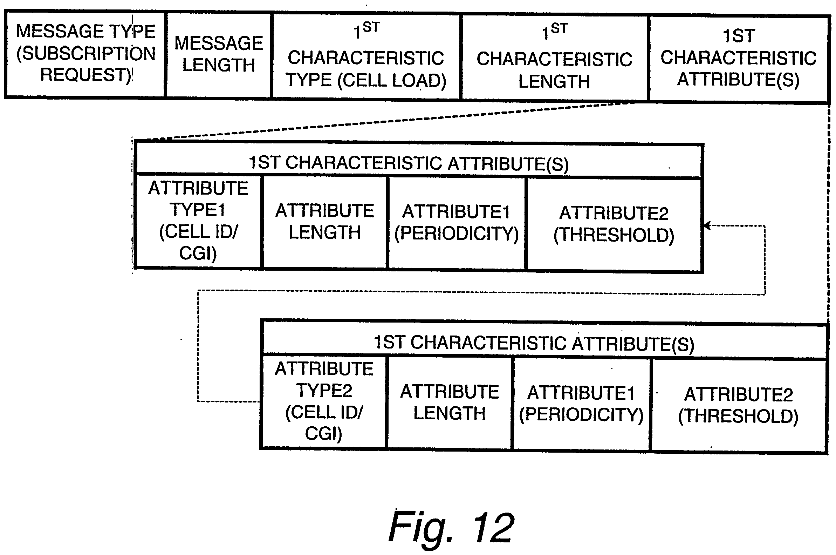

For the general scenario which encompasses the implementations of Fig. 10A, Fig. 10B, and Fig. 10C, the subscription request message can have the example format of Fig. 12. The subscription request message has as many ATTRIBUTE TYPE series as there are cells of interest, since each ATTRIBUTE TYPE is associated with a cell. In the example of Fig. 12, only two cells are assumed. Each attribute type is identified by a cell ID/CGI (cell global identifier). Each attribute type has two example attributes, e.g., periodicity and threshold.

Upon receipt of a subscription request message, the node with the subscription service determines if its subscription service is enabled. If not, the request is refused. If the subscription service is enabled, the subscription is stored, and a subscription response message (see, e.g., Fig. 3B) is returned to the requesting node. The subscription response signaling follows the same network path as the subscription request message for each of the implementations of Fig. 10A, Fig. 10B, and Fig. 10C.

Another general scenario of utilization of the subscribe-notification feature is involves the exchange of MSC/SGSN load information between MSCs/SGSNs in neighboring pools. For this general scenario, it is assumed that each MSC/SGSN in a pool is configured with the address of each MSC/SGSN in a neighboring pool or at least the default MSC/SGSN of the neighboring pool. The default MSC/SGSN of a target pool may be used to perform address translation as defined in 3GPP TS 23.236. Examples of implementations of this general scenario are below discussed with reference to Fig. 10A, Fig. 10B, and Fig. 10C.

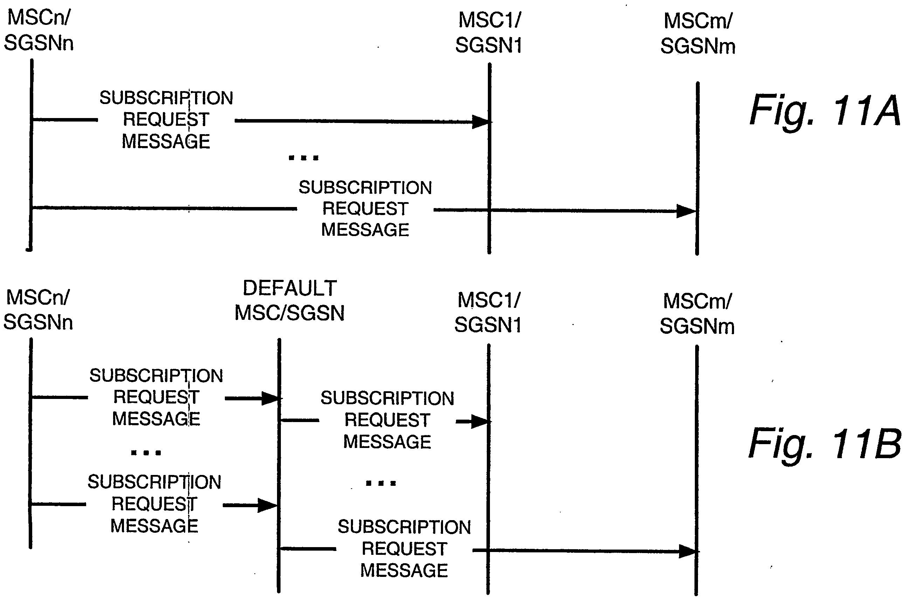

Fig. 11A is a message diagram showing transmission of a subscription request message between core network nodes in differing code network pools, wherein a core network node knows addresses of all core networks in a neighboring pool. Fig. 11B, on the other hand, is a message diagram showing transmission of a subscription request message between core network nodes in differing code network pools, wherein a core network node knows only an address of a default node in a neighboring pool.

After system start, each MSC/SGSN which has the subscription/notification function enabled with initiate the subscription procedure on all specified MSCs/SGSNs of the neighboring pool. The subscription request message contains the following information for all specified cells: the MSC/SGSN address; the periodicity of the MSC/SGSN load notification; the MSC/SGSN load threshold above which automatic notification will be executed. The threshold is preferably expressed as available capacity in Erlang. The subscription request message also specifies source address, destination address, and subscription type (e.g., neighboring pool load information in this case).

Upon reception of the subscription request message, the MSC/SGSN determines if its subscription/notify function is enabled. If not enabled, the subscription request is refused. If the subscription/notify function is enabled, the subscription is stored and a subscription response message is returned to the requesting node, with the response signaling following the same network path as the subscription request message.

When any notification criteria is realized (e.g., when the MSC/SGSN load notification time expires or the available capacity falls below the defined threshold), the MSC/SGSN notifies the subscribing MSC/SGSN with the required information as set by the subscription. The notification signaling follows the same network path as the subscription request message. The notification message includes the source address, the destination address, the subscription type, and the MSC/SGSN load per neighboring cell (expressed as available capacity in Erlang).

Thus, described herein is a generic subscription notification service which can be used by a public land mobile network (PLMN) node to subscribe to another PLMN node in order to obtain information as outlined in the subscription request. If the subscription is successful, the subscribing node (e.g., first node N_{A}) will receive the required information via a notification (e.g., notification message 1-3) from the subscribed node (e.g. second node N_{B}). The subscription notification service is compatible for, e.g., all interfaces within any radio access network or core network, between a core network node and a radio access node, and between different radio access networks.

An example employment of the subscription notification service can occur in the context of choosing a target cell for executing a handover to another node. Assume, for example, that a neighboring cell list consulted in conjunction with a potential handover includes, among other possible candidates, cells controlled by another node. The another node may be of a same radio access network as depicted in the Fig. 5A scenario, or of a differing radio access network as depicted in the Fig. 6A scenario, or of a differing type of radio access network (e.g., GSM or UTRAN). Moreover, the candidate cells may even be registered with differing core network node (e.g., differing MSC node).

A handover attempt will not be successful unless the candidate cell (or node controlling the candidate cell) has characteristics, capabilities, or capacities which are compatible with or otherwise consistent with the attempted handover. Otherwise, the handover attempt will fail. Failed handover attempts cost time and usurp network resources. Therefore, for seamless and efficient service, it is desirable that handover attempts have a high success rate. The subscription notification service as described herein facilitates operations such as handover by providing, in advance of the (handover) operation, pertinent information (e.g., requested subscription parameters) which is germane to the decision making process of whether the operation should occur. For example, the subscription notification service provides the current status and/or possible future changes respecting such handover-related parameters such as the cell load of possible candidate cells in other systems; the coding schemes supported in the possible candidate cells in other systems; the configured codec types supported by possible candidate cells in other systems; the quality of service capabilities of possible candidate cells in other systems; and other measurements concerning possible candidate cells in other systems.

The messages involved in the subscription notification service, and thus the information (e.g., subscription parameters) included therein, can be obtained directly from nodes with which direct interfaces exists. An example is the Fig. 5A scenario involving two peer RNC nodes, one of which (first node N_{A}) is a source RNC node and the other (second node N_{B}) a target node for handover purposes. Alternatively, the messages and information can be appropriately tunneled through other nodes when no direct interface exists. One example of such tunneling is the scenario of Fig. 5B, in which the subscription information is tunneled from target RAN node (second node N_{B}) via core network node 16 (e.g., an MSC node) to the source RAN node (second node N_{B}) using a generic container.

In a handover operation, the advance availability of the subscription parameter(s) guarantees a more intuitive decision in relation to target cell selection. Advantageously, the handover success rate increases using the subscription notification service.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A network control node (N_{A}, N_{B}) for use in a wireless telecommunication network
**characterised by**
a subscription enroller (102), configured to receive a subscription request message (1-1) from a node (N_{A}, N_{B}) specifying one or plural parameters of the network control node (N_{A}, N_{B}) for subscription reporting purposes;
a notifier (104), configured to generate a notification message (1-3) including a report of at least one of said parameters of the network control node (N_{A}, N_{B}), and wherein the notification message (1-3) is generated upon occurrence of one or more of an expiration of a notification interval or an attainment of a threshold associated with said parameter of the network control node (N_{A}, N_{B}); and
wherein said notifier (104) is further configured to transmit said generated notification message (1-3) to the node (N_{A}, N_{B}).

2. The network control node according to claim 1 wherein the parameter of the network control node is the load of a cell that is controlled by said network control node.

3. The network control node according to claim 1 wherein the parameter of the network control node is the capacity of a cell that is controlled by said network control node.

4. The network control node according to claim 1 wherein the parameter of the network control node is a coding scheme supported in a cell that is controlled by said network control node.

5. The network control node according to claim 1 wherein the parameter of the network control node is a codec type supported by said network control node.

6. The network control node according to claim 1 wherein the parameter of the network control node is the quality of service capability of said network control node.

7. The network control node according to claim 1 wherein the parameter of the network control node is a measurement concerning a cell that is controlled by said network control node.

8. A wireless telecommunication network
**characterised by**
a first network control node (N_{A}) and a second network control node (N_{B}) according to one of claims 1-7.

9. The wireless telecommunication network according to claim 8 wherein the first network control node and the second network control node are peer nodes of differing technology networks.

10. The wireless telecommunication network according to claim 8 wherein the first network control node is source node and the second network control node is a target node for handover purposes.

11. A method for operating a network control node (N_{A}, N_{B}) in a wireless telecommunication network
**characterised by**
receiving a subscription request message (1-1) from a node specifying one or plural parameters of the network control node for subscription reporting purposes;
generating a notification message (1-3) including a report of at least one of said parameters of the network control node upon occurrence of one or more of an expiration of a notification interval or an attainment of a threshold associated with the parameter of the network control node;
transmitting said notification message (1-3) upon generation of said notification message (1-3) to the node.

12. The method according to claim 11 wherein the parameter of the network control node is the load of a cell that is controlled by said network control node.

13. The method according to claim 11 wherein the parameter of the network control node is the capacity of a cell that is controlled by said network control node.

14. The method according to claim 11, wherein the parameter of the network control node is a coding scheme supported in a cell that is controlled by said network control node.

15. The method according to claim 11 wherein the parameter of the network control node is a codec type supported by said network control node.

16. The method according to claim 11 wherein the parameter of the network control node is quality of service capability of said network control node.

17. The method according to claim 11 wherein the parameter of the network control node is a measurement concerning a cell that is controlled by said network control node.

## Patentansprüche

1. Netzsteuerungsknoten (N_{A}, N_{B}) zur Verwendung in einem drahtlosen Telekommunikationsnetz,
**gekennzeichnet durch**
eine Teilnahmeanmeldeeinrichtung (102), die dafür konfiguriert ist, eine Teilnahmeanfragenachricht (1-1) von einem Knoten (N_{A}, N_{B}) mit der Angabe eines oder mehrerer Parameter des Netzsteuerungsknotens (N_{A}, N_{B}) zu Teilnahmemeldezwecken zu empfangen;
eine Benachrichtigungseinrichtung (104), die dafür konfiguriert ist, eine Benachrichtigung (1-3) mit einer Meldung mindestens eines der Parameter des Netzsteuerungsknotens (N_{A}, N_{B}) zu erzeugen, und wobei die Benachrichtigungsnachricht (1-3) nach dem Auftreten eines oder mehr von Folgendem erzeugt wird: Abgelaufensein eines Benachrichtigungsintervalls oder Erreichung einer Schwelle im Zusammenhang mit dem Parameter des Netzsteuerungsknotens (N_{A}, N_{B}); und
wobei die Benachrichtigungseinrichtung (104) ferner dafür konfiguriert ist, die erzeugte Benachrichtigungsnachricht (1-3) an den Knoten (N_{A}, N_{B}) zu übertragen.

2. Netzsteuerungsknoten nach Anspruch 1, wobei der Parameter des Netzsteuerungsknotens die Last einer Zelle ist, die von dem Netzsteuerungsknoten gesteuert wird.

3. Netzsteuerungsknoten nach Anspruch 1, wobei der Parameter des Netzsteuerungsknotens die Kapazität einer Zelle ist, die von dem Netzsteuerungsknoten gesteuert wird.

4. Netzsteuerungsknoten nach Anspruch 1, wobei der Parameter des Netzsteuerungsknotens ein Codierschema ist, das in einer Zelle unterstützt wird, die von dem Netzsteuerungsknoten gesteuert wird.

5. Netzsteuerungsknoten nach Anspruch 1, wobei der Parameter des Netzsteuerungsknotens ein Codec-Typ ist, der von dem Netzsteuerungsknoten unterstützt wird.

6. Netzsteuerungsknoten nach Anspruch 1, wobei der Parameter des Netzsteuerungsknotens eine Dienstgütefähigkeit des Netzsteuerungsknotens ist.

7. Netzsteuerungsknoten nach Anspruch 1, wobei der Parameter des Netzsteuerungsknotens ein Maß hinsichtlich einer Zelle ist, die von dem Netzsteuerungsknoten gesteuert wird.

8. Drahtloses Telekommunikationsnetz,
**gekennzeichnet durch**
einen ersten Netzsteuerungsknoten (N_{A}) und einen zweiten Netzsteuerungsknoten (N_{B}) nach einem der Ansprüche 1 bis 7.

9. Drahtloses Telekommunikationsnetz nach Anspruch 8, wobei der erste Netzsteuerungsknoten und der zweite Netzsteuerungsknoten Peer-Knoten von Netzen unterschiedlicher Technologie sind.

10. Drahtloses Telekommunikationsnetz nach Anspruch 8, wobei der erste Netzsteuerungsknoten ein Quellknoten und der zweite Netzsteuerungsknoten ist ein Zielknoten für Übergabezwecke ist.

11. Verfahren zum Betreiben eines Netzsteuerungsknotens (N_{A}, N_{B}) in einem drahtlosen Telekommunikationsnetz,
**gekennzeichnet durch**
Empfangen einer Teilnahmeanfragenachricht (1-1) von einem Knoten mit der Angabe eines oder mehrerer Parameter des Netzsteuerungsknotens zu Teilnahmemeldezwecken;
Erzeugen einer Benachrichtigungsnachricht (1-3) mit einer Meldung mindestens eines der Parameter des Netzsteuerungsknotens nach dem Auftreten eines oder mehr von Folgendem: Abgelaufensein eines Benachrichtigungsintervalls oder Erreichung einer Schwelle im Zusammenhang mit dem Parameter des Netzsteuerungsknotens;
Übertragen der Benachrichtigungsnachricht (1-3) an den Knoten nach Erzeugung der Benachrichtigungsnachricht (1-3).

12. Verfahren nach Anspruch 11, wobei der Parameter des Netzsteuerungsknotens die Last einer Zelle ist, die von diesem Netzsteuerungsknoten gesteuert wird.

13. Verfahren nach Anspruch 11, wobei der Parameter des Netzsteuerungsknotens die Fähigkeit einer Zelle ist, die von dem Netzsteuerungsknoten gesteuert wird.

14. Verfahren nach Anspruch 11, wobei der Parameter des Netzsteuerungsknotens ein Codierschema ist, das in einer Zelle unterstützt wird, die von dem Netzsteuerungsknoten gesteuert wird.

15. Verfahren nach Anspruch 11, wobei der Parameter des Netzsteuerungsknotens ein Codec-Typ ist, der von dem Netzsteuerungsknoten unterstützt wird.

16. Verfahren nach Anspruch 11, wobei der Parameter des Netzsteuerungsknotens die Dienstgütefähigkeit des Netzsteuerungsknotens ist.

17. Verfahren nach Anspruch 11, wobei der Parameter des Netzsteuerungsknotens eine Messung bezüglich einer Zelle ist, die von dem Netzsteuerungsknoten gesteuert wird.

## Revendications

1. Noeud de commande de réseau (N_{A}, N_{B}) destiné à être utilisé dans un réseau de télécommunication sans fil
**caractérisé en ce qu'**il comporte :
un inscripteur (102), configuré de manière à recevoir un message de demande d'abonnement (1 - 1) en provenance d'un noeud (N_{A}, N_{B}), spécifiant un ou plusieurs paramètres du noeud de commande de réseau (N_{A}, N_{B}) à des fins de signalisation d'abonnements ;
un module de notification (104), configuré de manière à générer un message de notification (1 - 3) incluant un rapport signalant au moins l'un desdits paramètres du noeud de commande de réseau (N_{A}, N_{B}), et dans lequel le message de notification (1 - 3) est généré suite à l'occurrence de l'un ou plusieurs des éléments parmi l'expiration d'un intervalle de notification ou le franchissement d'un seuil associé audit paramètre du noeud de commande de réseau (N_{A}, N_{B}) ; et
dans lequel ledit module de notification (104) est en outre configuré de manière à transmettre ledit message de notification généré (1 - 3) au noeud (N_{A}, N_{B}).

2. Noeud de commande de réseau selon la revendication 1, dans lequel le paramètre du noeud de commande de réseau est la charge d'une cellule qui est commandée par ledit noeud de commande de réseau.

3. Noeud de commande de réseau selon la revendication 1, dans lequel le paramètre du noeud de commande de réseau est la capacité d'une cellule qui est commandée par ledit noeud de commande de réseau.

4. Noeud de commande de réseau selon la revendication 1, dans lequel le paramètre du noeud de commande de réseau est un schéma de codage pris en charge dans une cellule qui est commandée par ledit noeud de commande de réseau.

5. Noeud de commande de réseau selon la revendication 1, dans lequel le paramètre du noeud de commande de réseau est un type de codec pris en charge par ledit noeud de commande de réseau.

6. Noeud de commande de réseau selon la revendication 1, dans lequel le paramètre du noeud de commande de réseau est la capacité en matière de qualité de service dudit noeud de commande de réseau.

7. Noeud de commande de réseau selon la revendication 1, dans lequel le paramètre du noeud de commande de réseau est une mesure relative à une cellule qui est commandée par ledit noeud de commande de réseau.

8. Réseau de télécommunication sans fil
**caractérisé en ce qu'**il comporte :
un premier noeud de commande de réseau (N_{A}) et un second noeud de commande de réseau (N_{B}) selon l'une quelconque des revendications 1 à 7.

9. Réseau de télécommunication sans fil selon la revendication 8, dans lequel le premier noeud de commande de réseau et le second noeud de commande de réseau sont des noeuds homologues de réseaux de technologies distinctes.

10. Réseau de télécommunication sans fil selon la revendication 8, dans lequel le premier noeud de commande de réseau est un noeud source et le second noeud de commande de réseau est un noeud cible utilisé à des fins de transfert intercellulaire.

11. Procédé destiné à exploiter un noeud de commande de réseau (N_{A}, N_{B}) dans un réseau de télécommunication sans fil
**caractérisé par** les étapes ci-dessous consistant à :
recevoir un message de demande d'abonnement (1 - 1) en provenance d'un noeud, spécifiant un ou plusieurs paramètres du noeud de commande de réseau à des fins de signalisation d'abonnements ;
générer un message de notification (1 - 3) incluant un rapport signalant au moins l'un desdits paramètres du noeud de commande de réseau, suite à l'occurrence de l'un ou plusieurs des éléments parmi l'expiration d'un intervalle de notification ou le franchissement d'un seuil associé au paramètre du noeud de commande de réseau ; et
transmettre ledit message de notification (1 - 3) suite à la génération dudit message de notification (1 - 3) au noeud.

12. Procédé selon la revendication 11, dans lequel le paramètre du noeud de commande de réseau est la charge d'une cellule qui est commandée par ledit noeud de commande de réseau.

13. Procédé selon la revendication 11, dans lequel le paramètre du noeud de commande de réseau est la capacité d'une cellule qui est commandée par ledit noeud de commande de réseau.

14. Procédé selon la revendication 11, dans lequel le paramètre du noeud de commande de réseau est un schéma de codage pris en charge dans une cellule qui est commandée par ledit noeud de commande de réseau.

15. Procédé selon la revendication 11, dans lequel le paramètre du noeud de commande de réseau est un type de codec pris en charge par ledit noeud de commande de réseau.

16. Procédé selon la revendication 11, dans lequel le paramètre du noeud de commande de réseau est une capacité en matière de qualité de service dudit noeud de commande de réseau.

17. Procédé selon la revendication 11, dans lequel le paramètre du noeud de commande de réseau est une mesure relative à une cellule qui est commandée par ledit noeud de commande de réseau.
